# EUROPEAN PATENT APPLICATION

(11) **EP 4 552 864 A1**
(43) Date of publication of application: **14.05.2025**
(21) Application number: 24211007.0
(22) Date of filing: 05.11.2024
(51) Int. Cl.: B60C 11/24

(54) **TREAD WEAR PREDICTION ACCORDING TO SEGMENTATION OF TIRE LIFE**

(30) Priority: 09.11.2023 US 202363597509 P; 12.09.2024 US 202418883140
(71) Applicant: The Goodyear Tire & Rubber Company, Akron, OH 44316 (US)
(72) Inventor: TORREGROSSA, Dario, L-2155 Luxembourg (LU); TRUFFO, Oliviero, L-6195 Imbringen (LU); DERLUYN, Pieter-Jan, L-8285 Kehlen (LU); GOMEZ, Leonardo, L-7750 Colmar-Berg (LU)
(74) Representative: Kutsch, Bernd

(57) **Abstract**

Disclosed are various approaches for estimating tread wear condition for a tire. Segment analysis data for a given segment and a given tire can be obtained. The segment analysis data can include tire data, vehicle data, or manual inspection data. A starting tread depth corresponding to a tread depth of a tire at a segment start can be determined. A segment distance corresponding to a distance the tire has traveled up to a segment end is determined. The starting tread depth and the segment distance are applied as inputs to a trained tread wear condition model. A tread wear condition is predicted based at least in part on an output of the tread wear condition model.

## Description

### BACKGROUND

Tire wear refers to the loss of material from the tread of the tire as indicated by the depth of the tire tread. Measuring or predicting the wear state of the tire may be beneficial. For example, information about the wear state of a tire may be useful in predicting tire performance during vehicle braking and/or handling, and may be used to determine when a tire should be replaced. In addition, the wear rate of the tire, which is the wear of the tire over time, may be useful in estimating tread depth as a function of time for predictions of tire performance and/or tire life.

### SUMMARY OF THE INVENTION

The invention relates to a system in accordance with claim 1 and to a method in accordance with claim 9.

Dependent claims refer to preferred embodiments of the invention.

The at least one computing device preferably comprises a vehicle computing device installed in a vehicle supported by the tire or a cloud computing device that is remote from the vehicle.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of a vehicle with one or more tires that include a tread wear sensor plug according to various embodiments of the present disclosure.
FIG. 2 is a perspective cross-sectional view of a tire shown in FIG. 1, prior to installation of the tread wear sensor plug according to various embodiments of the present disclosure.
FIG. 3 is a schematic block diagram of a networked environment according to various embodiments of the present disclosure.
FIG. 4 is an example drawing of segment analysis data and how the segment analysis data can differ for each segment according to various embodiments of the present disclosure.
FIG. 5 is a flowchart illustrating one example of functionality implemented as portions of a sensor placement monitoring application executed in a computing environment in the networked environment of FIG. 3 according to various embodiments of the present disclosure.

### DEFINITIONS

"CAN bus" is an abbreviation for controller area network.

"Innerliner" means the layer or layers of elastomer or other material that form the inside surface of a tubeless tire and that contain the inflating fluid within the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

"Ideal tire life segment" means a period of operational time-span in which the tire is not manipulated (maintained, swapped, retreated, unmounted, etc.).

### DETAILED DESCRIPTION OF PREFERRED EMBODIMENTS OF THE INVENTION

Disclosed are various approaches for estimating tread wear condition for a tire. According to various examples, machine learning models can be trained to predict an estimated tread wear condition of a tire. The tread wear condition can include an available time to reach the replacement tread depth, a remaining available distance for the tire to reach the replacement tread depth, an estimated remaining tread depth, and/or other data associated with a condition of tread wear for a given tire. According to various examples, predicting the tread wear condition can be based at least in part on tire data, vehicle data, manual inspection data, and/or other data. In addition, the tread wear condition can be predicted based on tire life ideal segmentation. An ideal segment is a portion of a tire life in which the tire is not manipulated (e.g., position of the tire on the vehicle does not change, maintenance operations are not performed). By predicting the tread wear condition of a tire based at least in part on an ideal segment of a tire life, the prediction is not subject inaccuracies that may result due to tire manipulation during the lifetime of the tire. In addition, the models trained on the concept of an ideal tire life segment can guarantee a high performance regardless of the operations carried out by the consumers. Indeed, it is not necessary to keep track of the full tire operational history neither to assume the improbable scenario that no event occur on tires.

Commercial fleet or consumer fleet customers rely on vehicle maintenance cycle to identify worn out tires. A commercial fleet can correspond to a fleet of vehicles including semitrucks, semi-trailers, dump trucks, etc.. A consumer fleet can correspond to a fleet of vehicles including, cars, sport utility vehicles(SUVs), pickup trucks, etc. Relying on a vehicle maintenance cycle can result in an inability to plan tire purchase, missing worn out tires and/or prematurely pulling tires from service. In order to support the management of tires installed on consumers' fleet, the present disclosure provides a prediction associated with a treadwear condition. Using the predicted treadwear condition, commercial or consumer users can efficiently comply with the legal tread requirement, save on tire inspection labor, and optimize future tire purchase. In addition, tire manufacturers can proactively supply tires to the fleet consumers.

Techniques have been developed to directly measure tire wear state using sensors that are attached to the tire. Direct techniques include certain advantages, such as relative simplicity in the approach of measurement of pressure, temperature and/or tread depth with a sensor. Direct techniques also include challenges, such as proper sensor mounting without affecting tire integrity, sensor life and/or transmission of sensor data in the harsh environment of a tire.

Due to such challenges, indirect techniques have been developed. Indirect techniques take certain tire and/or vehicle sensor measurements into account and then generate a prediction or estimate of tire state and/or tire wear rate. While indirect techniques do not necessarily encounter the challenges of sensor mounting, sensor life, and/or transmission of sensor data, they include challenges in achieving accuracy and repeatability in the estimation or prediction that is generated. For example, many indirect techniques have experienced disadvantages due to a lack of optimum prediction techniques, which in turn reduces the accuracy and/or reliability of the tread wear predictions. As a result, there is a need a system that accurately and reliably estimates the wear rate of a tire and generates a forecast for replacement of the tire.

In the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

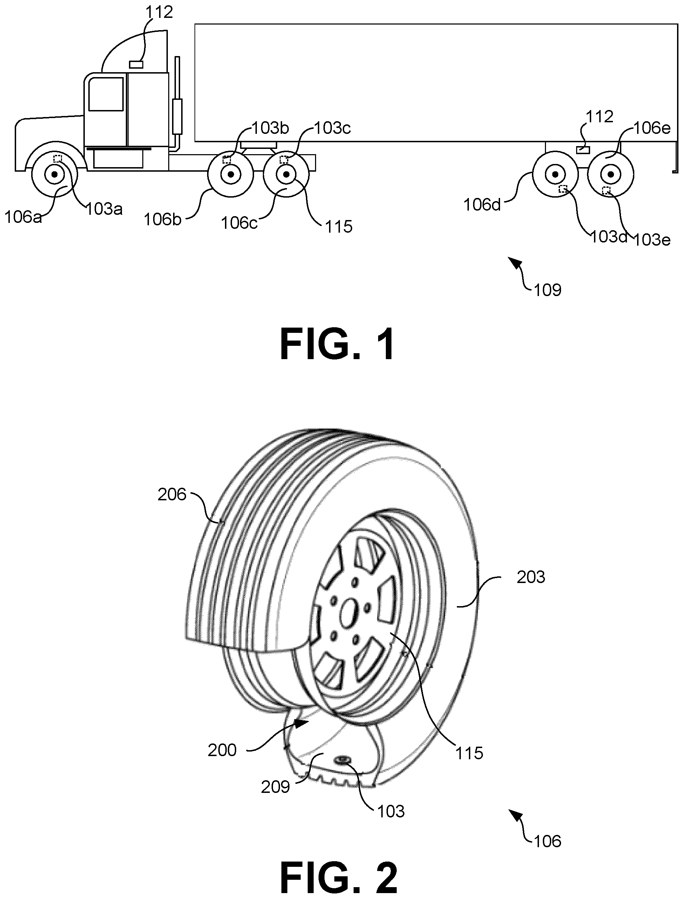

Turning now to FIGS. 1 and 2, shown are examples of sensor units 103 attached to tires 106 of a vehicle 109 according to various embodiments. In particular, FIG. 1 illustrates an example of a vehicle 109 comprising a plurality of tires 106 (e.g., 106a, 106b, 106c, 106d, 106e). Each tire 106 includes a sensor unit 103 (e.g., 103a, 103b, 103c, 103d, 103e). FIG. 2 illustrates a cross-sectional view of a tire 106 illustrating the sensor unit 103 being mounted to the inner surface of the tire 106.

The tires 106 are of conventional construction, and each tire is mounted on a respective wheel 115 as known to those skilled in the art. Each tire 106 includes a pair of sidewalls 203 (only one shown) that extend to a circumferential tread 206. An innerliner 209 is disposed on the inner surface of the tire 106, and when the tire is mounted on the wheel 115, an internal cavity 200 is formed, which is filled with a pressurized fluid, such as air.

As illustrated in FIG. 2, a sensor unit 103 is attached to the innerliner 209 of each tire 106 by means such as an adhesive, and is configured to measure certain parameters or conditions of the tire 106 as will be described in greater detail below. Although the sensor unit 103 is illustrated as being attached to the innerliner 209 in FIG. 2, it is understood that the sensor unit 103 may be attached in such a manner, or to other components of the tire 106, such as on or in one of the sidewalls 203, on or in the tread 206, on the wheel 115, and/or a combination thereof. For the purpose of convenience, reference herein shall be made to mounting of the sensor unit 103 on the tire 106, with the understanding that such mounting includes all such types of attachments.

In various examples, the sensor unit 103 is mounted on each tire 106 for the purpose of detecting certain real-time parameters of the tire 106, such as tire pressure and tire temperature. In various examples, the sensor unit 103 can comprise at least one of a pressure sensor to sense the inflation pressure within a cavity 200, a temperature sensor to measure a temperature of the tire, an accelerometer for measuring acceleration of a wheel 115 on which the tire 106 is mounted, a revolution counter to measure a revolution time of the wheel 115, and/or other types of sensors. The sensor unit 103 may be part of a commercially available tire pressure monitoring system (TPMS) module or sensing unit.

In various examples, the sensor unit 103 comprises a processor and memory to store vehicle tire information for each specific tire 106. For example, the tire vehicle tire information may include a tire identifier (ID), manufacturing information for the tire 106 (e.g., model number, manufacturer name, etc.), size information (e.g., rim size, width, and outer diameter), manufacturing location, manufacturing date, a tread cap code that includes or correlates to a compound identification, a mold code that includes or correlates to a tread structure identification, and/or other information. The vehicle tire information may also include a service history or other information to identify specific features and parameters of each tire 106. Alternativity or additionally, the vehicle tire information may be included in another sensor unit 103, or in a separate vehicle storage medium, such as a tire ID tag, which preferably is in electronic communication with the sensor unit 103.

The sensor unit 103 further includes an antenna (not shown) for wirelessly transmitting measured parameters and tire information data to a remote processor for analysis, such as a processor integrated into a vehicle computing device 112, a Controller Area Network (CAN) bus associated with the vehicle 109, and/or a cloud computing device. According to various embodiments, each one of the tires 106 on the vehicle 109 may include one or more of the sensor units 103.

While the vehicle 109 of FIG. 1 is depicted as a commercial truck, the vehicle 109 may comprise any type of vehicle that employs tires where the commercial truck is presented as an example. To this end, the vehicle 109 may comprise other vehicles falling into various categories such as passenger vehicles, off-road vehicles and the like, in which such vehicles 109 include a greater or lesser number of tires 106 than are shown in FIG. 1.

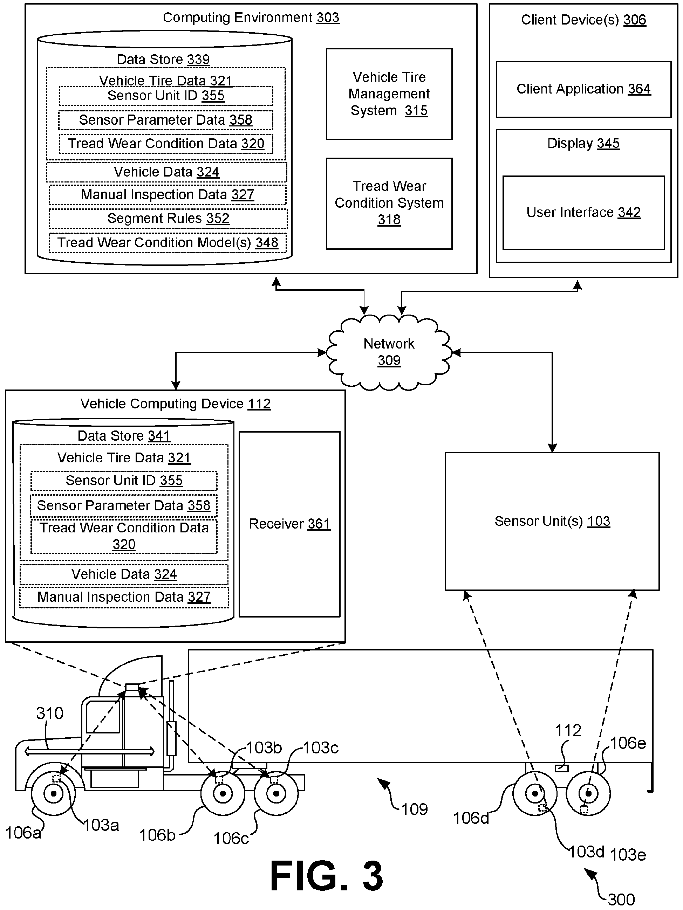

Turning now to FIG. 3, shown is a networked environment 300 according to various embodiments. The networked environment 300 includes a computing environment 303, a client device 306, and a vehicle 109 which are in data communication with each other via a network 309. The vehicle 109 can include one or more vehicle computing devices 112, one or more sensor unit(s) 103, and a Controller Area Network (CAN) bus 310 that facilitates data communication between various systems on the vehicle 109. In one embodiment, the vehicle computing device(s) 112 are coupled to the CAN bus 310 and may communicate with systems included on the CAN bus 310.

The network 309 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI^{®}), BLUETOOTH° networks, microwave transmission networks, as well as other networks relying on radio broadcasts. The network 309 can also include a combination of two or more networks 309. Examples of networks 309 can include the Internet, intranets, extranets, virtual private networks (VPNs), and similar networks.

The computing environment 303 may comprise, for example, a server computer or any other system providing computing capability. Alternatively, the computing environment 303 may employ a plurality of computing devices that may be arranged, for example, in one or more server banks or computer banks or other arrangements. Such computing devices may be located in a single installation or may be distributed among many different geographical locations. For example, the computing environment 303 may include a plurality of computing devices that together may comprise a hosted computing resource, a grid computing resource, and/or any other distributed computing arrangement. In some cases, the computing environment 303 may correspond to an elastic computing resource where the allotted capacity of processing, network, storage, or other computing-related resources may vary over time.

Various applications and/or other functionality may be executed in the computing environment 303 according to various embodiments. Also, various data is stored in a data store 312 that is accessible to the computing environment 303. The data store 312 may be representative of a plurality of data stores 312 as can be appreciated. The data stored in the data store 312, for example, is associated with the operation of the various applications and/or functional entities described below.

Various applications or other functionality can be executed in the computing environment 303. The components executed on the computing environment 303 include a vehicle tire management system 315, a tread wear condition system 318, and other applications, services, processes, systems, engines, or functionality not discussed in detail herein. The vehicle tire management system 315 is executed to track the location and status of tires 106 mounted on a plurality of vehicles 109. Such a vehicle tire management system 315 may track hundreds if not thousands of tires 106 on many vehicles 109. The vehicle tire management system 315 indicates to operators when tires 106 may need to be serviced, replaced, or the vehicle tire management system 315 may provide other information.

The tread wear condition system 318 can be executed to predict a tread wear condition associated with a tire 106 of a vehicle 109. The tread wear condition can include an available time to reach the replacement tread depth, a remaining available distance for the tire to reach the replacement tread depth, an estimated current tread depth, and/or other data associated with a condition of tread wear for a given tire 106. In various examples, the tread wear condition system 318 predicts the tread wear condition associated with the tire 106 according to vehicle tire data 321, vehicle data 324, manual inspection data 327, and/or other data.

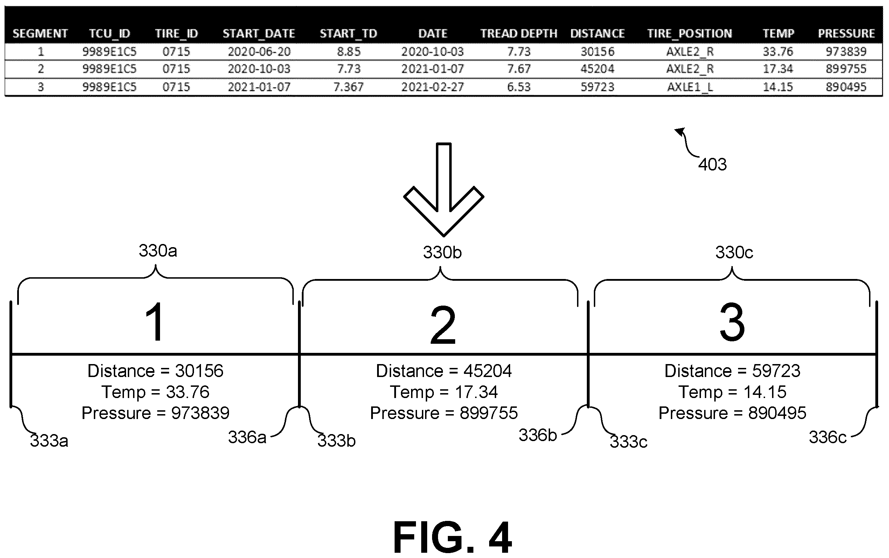

In various example, the tread wear condition system 318 predicts a tread wear condition for a given ideal tire life segment 330 (FIG. 4). A segment 330 corresponds to a range of time of associated with a tire life where the tire has not been manipulated (e.g., maintained, swapped, retreated, unmounted, etc.). For example, a tire can be manipulated when the tire 106 is moved to a different position on the vehicle. In another example, a tire 106 can be manipulated during maintenance operations (e.g., retread, reshape, etc.).

In various examples, the tread wear condition system 318 can determine a segment 330 according to a segment start 333 (FIG. 4) and a segment end 336 (FIG. 4). A segment start 333 can initially correspond to the initial installation of a tire 106 on a vehicle. Thereafter, the segment start 333 can correspond to the segment end 336 of the prior segment 330, a time associated with a manipulation of the tire (e.g., maintenance report, inspection data, etc.), and/or other time. A segment end 335 can be determined based at least in part on a predefined threshold temporal value (e.g., 3 months, 9 months, 1 year, 2 years, etc.), a predefined threshold distance value associated with an amount of distance travelled by the vehicle 109 supported by the tire 106 (e.g., 50,000 kilometers, 100,000 kilometers, etc.), and/or other factor. Accordingly, for a first segment 330 of a tire life, and using the example of a threshold distance of 100,000 kilometers, the segment start 333 can correspond to the time in which the tire 106 is installed on the vehicle 109 and the segment end 336 can correspond to a time in which the vehicle 109 has travelled 100,000 kilometers. However, in some examples, if a maintenance report indicates manipulation of the tire 106 prior to the 100,000 kilometers, the segment start 333 may correspond to a time of the tire manipulation instead of the time in which the tire 106 was originally installed.

In various examples, the tread wear condition system 318 can obtain segment analysis data associated with a given segment 330. The segment analysis data can include vehicle tire data 321, vehicle data 324, manual inspection data 327, and/or other data. In some examples, the vehicle tire data 321 can be obtained from a sensor unit 103 in data communication the tread wear condition system 318. In some examples, the vehicle data 324 can be obtained from a vehicle CAN bus in data communication with one or more vehicle systems of a vehicle 109 supported by the tire 106. The manual inspection data 327 can be obtained from a data store 339 of the computing environment 303 or a data store 341 of the vehicle computing device 112. The manual inspection data 327 can be stored in a datastore 339, 341 in response to one or more user interactions with a user interface 342 rendered on a display 345 of a client device 306 (e.g., an inspector or service provider updating service or inspection records associated with the tire 106 and/or vehicle 109).

In response to obtaining the segment analysis data, the tread wear condition system 318 can determine the starting tread depth of the tire 106 based at least in part on the segment analysis data. For example, if the segment is the first segment 330, the starting tread depth can correspond to an original tread depth of the tire 106. Otherwise, the starting tread depth can be determined based at least in part on the prior tread wear condition estimates, the manual inspection data 327, and/or other data. The tread wear condition system 318 can further determine a segment distance associated with the given segment 330. The segment distance corresponds to the distance the vehicle 109 supported by the tire 106 traveled up to the ending time associated with the segment 330. For example, the segment distance can correspond to an odometer reading value included in the vehicle data 324.

The tread wear condition system 318 can execute a tread wear condition model 348 that is trained to output a tread wear condition, and apply the segment distance, the starting or remaining tread depth, and/or other factors as inputs to the tread wear condition model 348. Each tire 106 includes a segment starting tread depth. For a new tire 106, the segment starting tread depth can correspond to the original tread depth. However, as the tire 106 wears, the tread depth decreases and the segment starting tread depth will represent a decreased tread depth. This decreased tread depth can correspond to a segment starting tread depth for a subsequent segment 330 of the tire life. In some examples, the segment 330 starting tread depth can correspond to tread depth measured during a manual inspection or service. In other examples, the segment starting tread depth can correspond to an estimated remaining tread depth associated with the prior segment 330.

In some examples, the tread wear condition model 348 can be trained to output a remaining available distance, a remaining available time for the tire 106 to reach a replacement tread depth, an estimated remaining tread depth, and/or other tire wear condition. In various examples, the tread wear condition model 348 analyzes data inputs, such as the distance, a segment starting tread depth, etc., to estimate the tire wear condition. In various examples, the tread wear condition model 348 generates the tread wear condition according to the input factors, a replacement tread depth, and/or other factors. A remaining tread depth can be expressed as a dimension or a percentage of the original tread depth. A replacement tread depth can correspond to specific dimension or a specific percentage of the original tread depth. In some examples, the replacement tread depth can be predefined and included in the segment rules 352 and/or part of the functionality of the tread wear condition model 248 data.

The tread wear condition system 318 can be executed to generate a notification including the tread wear conditions 320 associated with the output of the tread wear condition model 348. The tread wear condition system 318 can transmit the notification to a client device 306, the vehicle computing device 112, and/or other device to be rendered on a display 345 of the client device, vehicle computing device 112, vehicle, and/or other computing device.

It should be noted that although the tread wear condition system 318 is illustrated in FIG. 3 as being separate from the vehicle tire management system 315, in various embodiments, at least a portion of the functionality of the tread wear condition system 318 can be implemented as part of the vehicle tire management system 315. Similarly, in some embodiments, at least a portion of the vehicle tire management system 315 can be implemented as part of the tread wear condition system 318.

Also, various data is stored in a data store 339 that is accessible to the computing environment 303. The data store 339 can be representative of a plurality of data stores 339, which can include relational databases or non-relational databases such as object-oriented databases, hierarchical databases, hash tables or similar key-value data stores, as well as other data storage applications or data structures. Moreover, combinations of these databases, data storage applications, and/or data structures may be used together to provide a single, logical, data store. The data stored in the data store 339 is associated with the operation of the various applications or functional entities described below. This data can include vehicle tire data 321, vehicle data 324, manual inspection data 327, segment rules 352, a tread wear condition model 348, and potentially other data.

The vehicle tire data 321 can include information for each specific tire 106. For example, the vehicle tire data 321 may include a tire identifier, manufacturing information for the tire 106 (e.g., manufacture name, tire model, etc.), tire size information (e.g., rim size, width, and outer diameter, etc.), manufacturing location, manufacturing date, a tread cap code that includes or correlates to a compound identification, a mold code that includes or correlates to a tread structure identification, and/or other information. The vehicle tire data 321 may also include a service history or other information to identify specific features and parameters of each tire 106. The vehicle tire data 321 can further include a sensor unit ID 355, sensor parameter data 358, tire wear condition 320, and/or other data.

The sensor unit ID 355 can include an alphanumeric identifier that can be used to identify the sensor unit 103 on a given tire 106. In some examples, the sensor unit ID 355 can include additional information about the sensor unit 103, including a location of the tire, which axel the tire 106 is installed on, a side of the vehicle 109 on which the tire 106 is located (e.g., left, right), and/or other information.

The sensor parameter data 358 can comprise data collected from a sensor unit 103 on a given tire 106. As previously discussed, the sensor unit 103 can comprise at least one of a pressure sensor, a temperature sensor, an accelerometer, a revolution counter, and/or other types of sensors. Accordingly, the sensor parameter data 358 can include temperature data, pressure data, accelerometer data, revolution data, and/or other types of data.

The tread wear condition data 320 can included data associated with a tread wear condition for a given segment 330. For example, the tread wear condition data 320 can include a remaining available distance, a remaining available time for the tire 106 to reach a replacement tread depth, an estimated remaining tread depth, and/or other tire wear condition data for a given segment 330. In addition, the tread wear condition data 320 can include the segment start 333, the segment end 336, the starting segment tread depth, and/or other data.

The vehicle data 324 can include data associated with a vehicle 109 supported by the tire 106. The vehicle data 324 can be obtained from a vehicle CAN bus in communication with one or more vehicle systems of a vehicle supported by the tire 106. The vehicle data 324 can include a vehicle speed, a vehicle load, an odometer value, a brake cylinder pressure value, and/or other type of vehicle data.

The manual inspection data 327 can include data associated with inspections or services performed on the vehicle 109 and/or given tire 106. The manual inspection data 327 can include a measured tread depth, an inspection date, an inspector name, a tire position, a tire pressure, a service performed, and/or other information that can be obtained during an inspection or service.

The segment rules 352 include rules, models, and/or configuration data for the various algorithms or approaches employed by the tread wear condition system 318, the vehicle tire management system 315, and/or other application or device. For example, the segment rules 352 can include the various models and/or algorithms for determining a segment start 333 and a segment end 336 for a given segment. In some examples, the segment rules 352 can include threshold values associated with defining a segment length and/or when a tread wear condition is to be determined. For example, the segment rules 353 can include a predefined segment distance, a predefined temporal value, and/or other rules or values that can be used to trigger the tread wear condition system 318 to identify a segment 330 and calculation the tread wear condition for a given tire 106. In some examples, the segment rules 352 can include a replacement tread depth and/or other values that may be used by the tread wear condition system and/or the tread wear condition model 348 to generate the tread wear condition of a tire 106 for a given segment 330.

The tread wear condition model 348 comprises a machine learning model trained to predict a tread wear condition for a given tire 106. In various examples, the tread wear condition model 348 comprises is a linear machine learning model. For example, the tread wear condition model 348 can comprise a parametric model, which assumes a fixed mathematical form to calculate an output. Residuals, which are differences between observed and predicted values, can then adjusted by a non-parametric model. The results are generated in different forms such as plots, files, and variables in an interactive environment. The survival analysis technique and the non-parametric models take multiple continuous and categorical parameters as inputs.

The vehicle 109 includes a plurality of sensor units 103, each sensor unit 103 being positioned on the inside of a respective one of a plurality of tires 106 of the vehicle 109. The sensors units 103 can be employed as part of a tire pressure monitoring system (TPMS) as will be described. Some of the tires 106 are mounted on dual wheel hubs such as in the case where the vehicle 109 comprises an eighteen-wheel tractor-trailer as depicted in FIG. 1.

Each sensor unit 103 comprises a processor and memory to store vehicle tire information for each specific tire 106. For example, the vehicle tire information may include a tire identifier (ID), manufacturing information for the tire 106 (e.g., model number, manufacturer name, etc.), size information (e.g., rim size, width, and outer diameter), manufacturing location, manufacturing date, a tread cap code that includes or correlates to a compound identification, a mold code that includes or correlates to a tread structure identification, and/or other information. The vehicle tire information may also include a service history or other information to identify specific features and parameters of each tire 106. Alternativity or additionally, the vehicle tire information may be included in another sensor unit 103, or in a separate vehicle storage medium, such as a tire ID tag, which preferably is in electronic communication with the sensor unit 103.

The sensor unit 103 further includes an antenna (not shown) for wirelessly transmitting measured parameters and tire information data to a remote processor for analysis, such as a processor integrated into a vehicle computing device 112 and/or a Controller Area Network (CAN) bus 310 associated with the vehicle 109.

The vehicle computing device 112 comprises a processor circuit that executes, for example, a tread wear condition system 318 and/or other applications. In one embodiment, the vehicle computing device 112 may be integrated with other systems in the vehicle 109. In the case that the vehicle comprises a tractor-trailer, a vehicle computing device 112 may be located on the back of the trailer so as to be within range of wireless communication with the sensor units 103 in the tires 106 of the trailer. The vehicle computing device 112 can also a receiver 361 for obtaining sensor parameter data 358 transmitted from the sensor units 103 on the tires 106 of the vehicle. In various examples, the vehicle computing device 112 can include a communication system to facilitate communication with the computing environment over the network 309. In this respect, the vehicle computing device 112 may include appropriate communications capabilities to link to a cellular network, Wi-Fi network, BLUETOOTH^{®} network, microwave transmission network, radio broadcast networks, or other communication networks.

Also, various data is stored in a data store 341 that is accessible to the vehicle computing device 112. The data store 341 may be representative of a plurality of data stores 341 as can be appreciated. The data stored in the data store 341, for example, is associated with the operation of the various applications and/or functional entities associated with the vehicle 109, the computing environment 303, and/or other computing device or server. For example, the data store 341 can include vehicle tire data 321, vehicle data 324, manual inspection data 327, and/or other information.

It should be noted that although the functionality of the tread wear condition system 318 and the vehicle tire management system 315 are illustrated in FIG. 3 as being part of the computing environment 303, in some embodiments, the functionality of at least a portion of these systems can be implemented within vehicle computing device 112, the sensor units 103, and/or other computing device or environment as can be appreciated.

The client device 306 is representative of a plurality of client devices that can be coupled to the network 309. The client device 306 can include a processor-based system such as a computer system. Such a computer system can be embodied in the form of a personal computer (e.g., a desktop computer, a laptop computer, or similar device), a mobile computing device (e.g., personal digital assistants, cellular telephones, smartphones, web pads, tablet computer systems, music players, portable game consoles, electronic book readers, and similar devices), media playback devices (e.g., media streaming devices, BluRay^{®} players, digital video disc (DVD) players, set-top boxes, and similar devices), a videogame console, or other devices with like capability. The client device 306 can include one or more displays 345, such as liquid crystal displays (LCDs), gas plasma-based flat panel displays, organic light emitting diode (OLED) displays, electrophoretic ink ("E-ink") displays, projectors, or other types of display devices. In some instances, the display 345 can be a component of the client device 306 or can be connected to the client device 306 through a wired or wireless connection.

The client device 306 can be configured to execute various applications such as a client application 364 or other applications. The client application 364 can be executed in a client device 306 to access network content served up by the computing environment 303 or other servers, thereby rendering a user interface 342 on the display 345. To this end, the client application 364 can include a browser, a dedicated application, or other executable, and the user interface 342 can include a network page, an application screen, or other user mechanism for obtaining user input. The client device 306 can be configured to execute applications beyond the client application 364 such as email applications, social networking applications, word processors, spreadsheets, or other applications.

Next, a general description of the operation of the various components of the network environment 300 is provided with regard to FIGS. 4-5. To begin, FIG. 4 illustrates an example of segment analysis data 403 and how the segment analysis data 403 can differ for each segment 330. According to various examples, the segment analysis data 403 can be comprise or otherwise be generated based at least in part on tire vehicle data 321, vehicle data 324, manual inspection data 327, and/or other data. The tread wear condition is predicted based at least in part on analysis by the tread wear condition model 348 with the segment analysis data 403 being applied as inputs to the tread wear condition model 348.

In various examples, the tread wear condition can be predicted based on tire life ideal segmentation. An ideal segment is a portion of a tire life in which the tire is not manipulated (e.g., position of the tire on the vehicle does not change, maintenance operations are not performed).

FIG 4 illustrates three segments 330 (e.g., 330a, 330b, 330c) that each have a different segment start 333 (e.g., 333a, 333b, 333c) and a different segment end 336 (e.g., 336a, 336b, 336c). For each segment 330, the segment analysis data 403 will differ. For example, for segment 330a, the starting tread depth is 8.85, the ending tread depth is 7.73, the segment distance is 30156, the tire position is on the right of the second axle, the average temperature value is 33.76, and the average pressure value is 373839. Conversely, for segment 330b, the starting tread depth is 7.73, the ending tread depth is 7.67, the segment distance is 45204, the tire position is on the right of the second axle, the average temperature value is 17.34, and the average pressure value is 890495. By predicting the tread wear condition of a tire 106 based at least in part on segment analysis data 403 associated with an ideal segment of a tire life, the prediction is not subject inaccuracies that may result due to tire manipulation during the lifetime of the tire 106.

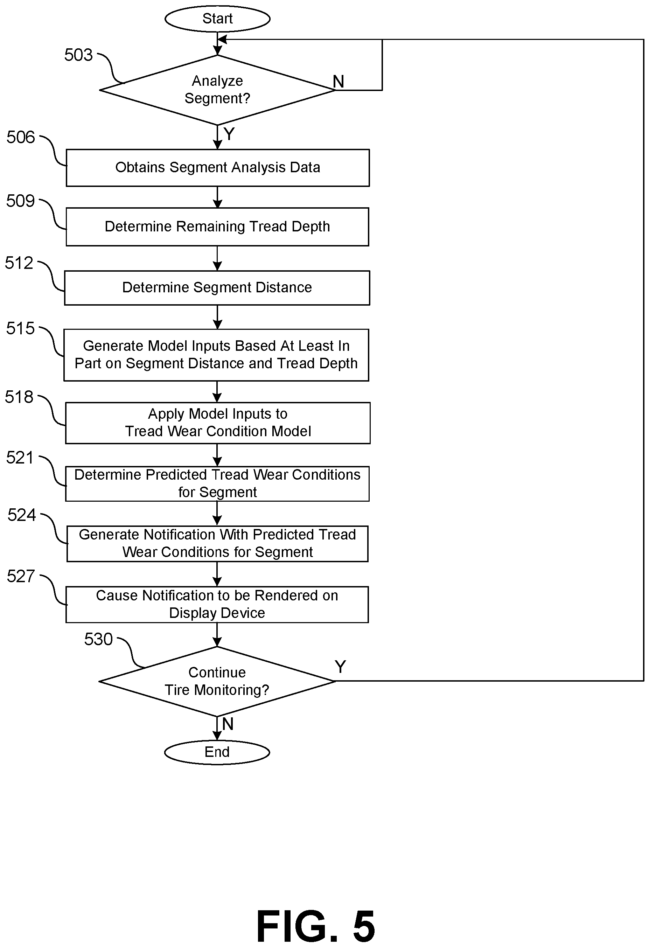

Referring next to FIG. 5, shown is a flowchart that provides one example of the operation of a portion of the tread wear condition system 318. The flowchart of FIG. 5 provides merely an example of the many different types of functional arrangements that can be employed to implement the operation of the depicted portion of the tread wear condition system 318. As an alternative, the flowchart of FIG. 5 can be viewed as depicting an example of elements of a method implemented within the network environment 300.

Beginning with block 503, the tread wear condition system 318 determines if a segment 330 is to be analyzed. A segment 330 corresponds to a range of time of associated with a tire life where the tire has not been manipulated. In various examples, the tread wear condition system 318 can determine a segment 330 according to a segment start 333 (FIG. 4) and a segment end 336 (FIG. 4). A segment start 333 can initially correspond to the initial installation of a tire 106 on a vehicle. Thereafter, the segment start 333 can correspond to the segment end 336 of the prior segment 330, a time associated with a manipulation of the tire (e.g., maintenance report, inspection data, etc.), and/or other time. A segment end 335 can be determined based at least in part on a predefined threshold temporal value (e.g., 3 months, 9 months, 1 year, 2 years, etc.), a predefined threshold distance value associated with an amount of distance travelled by the vehicle 109 supported by the tire 106 (e.g., 50,000 kilometers, 100,000 kilometers, etc.), and/or other factor. The tread wear condition system 318 can be triggered to analyze a segment 330 in response to an indication of a segment end 335. If the segment 330 is to be analyzed, the process proceeds to block 506, otherwise, the process waits at block 503.

At block 506, the tread wear condition system 318 obtains segment analysis data 403. The segment analysis data 403 can comprise tire vehicle data 321, vehicle data 324, manual inspection data 327, and/or other data. In some examples, the vehicle tire data 321 can be obtained from a sensor unit 103 in data communication the tread wear condition system 318. In some examples, the vehicle data 324 can be obtained from a vehicle CAN bus in data communication with one or more vehicle systems of a vehicle 109 supported by the tire 106. The manual inspection data 327 can be obtained from a data store 339 of the computing environment 303 or a data store 341 of the vehicle computing device 112. The manual inspection data 327 can be stored in a datastore 339, 341 in response to one or more user interactions with a user interface 342 rendered on a display 345 of a client device 306 (e.g., an inspector or service provider updating service or inspection records associated with the tire 106 and/or vehicle 109).

At block 509, the tread wear condition system 318 determines the remaining tread depth. If the segment 330 is the first segment, the tread wear condition system 318 can determines that the remaining tread depth corresponds to the original tread depth of the tire 106. In some examples, the original tread depth is included in the tire vehicle data 321. If the segment 330 is not the first segment, the tread wear condition system 318 can determine the remaining tread depth based at least in part on the manual inspection data 327, the tread wear condition data 320 that is associated with the prior segment 330, and/or other data.

At block 512, the tread wear condition system 318 determines the segment distance. The segment distance corresponds to the distance the vehicle 109 supported by the tire 106 traveled up to the ending time associated with the segment 330. For example, the segment distance can correspond to an odometer reading value included in the vehicle data 324.

At block 515, the tread wear condition system 318 generates model inputs based at least in part on the segment distance and the remaining tread depth. In various examples, the model inputs can include other data associated with the tire 106 and/or vehicle 109, such as, for example, a tire position, an average temperature during the segment, an average pressure during the segment, an average brake cylinder pressure, and/or other data. In examples where the average temperature or an average pressure is included as a model input, the tread wear condition system 318 can calculate the average temperature and/or the average pressure based at least in part on the temperature and/or pressure values included in the sensor parameter data 358 for the given segment 330.

At block 518, the tread wear condition system 318 applies the model inputs to the tread wear condition model 348. In various examples, the tread wear condition system 318 can execute a tread wear condition model 348, and apply the segment distance, the remaining tread depth, and/or other model inputs to the tread wear condition model 348. The tread wear condition system 318 is trained to output the tread wear condition and/or data that can be used to generate the tread wear condition. The tread wear condition can include an available time to reach the replacement tread depth, a remaining available distance for the tire to reach the replacement tread depth, an estimated remaining tread depth, and/or other data associated with a condition of tread wear for a given tire.

At block 521, the tread wear condition system 318 determines the tread wear condition of the tire 106 for the given segment based at least in part on the output of the tread wear condition model 348.

At block 524, the tread wear condition system 318 generates a notification including the predicted tread wear conditions. The notification can comprise a user interface 342 that includes content that notifies an entity associated with the vehicle 109 (e.g., fleet manager, user, etc.) of the tread wear condition of a tire 106 for the given segment 330. The tread wear condition system 318 can transmit, at block 527, the notification to a client device 306, the vehicle computing device 112, and/or other device to be rendered on a display 345 of the client device, vehicle computing device 112, vehicle, and/or other computing device.

At block 530, the tread wear condition system 318 determines whether to continue monitoring the tire 106. For example, if the tire 106 is removed from the vehicle 109 because of the tread wear condition, the tire life has elapsed, and/or other reason, the tread wear condition system 318 will determine that monitoring is no longer needed. Thereafter, this portion of the process proceeds to completion. Otherwise, the tread wear condition system 318 will return to block 503.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random-access portion of the memory and run by the processor, source code that can be expressed in proper format such as object code that is capable of being loaded into a random-access portion of the memory and executed by the processor, or source code that can be interpreted by another executable program to generate instructions in a random-access portion of the memory to be executed by the processor. An executable program can be stored in any portion or component of the memory, including random-access memory (RAM), read-only memory (ROM), hard drive, solid-state drive, Universal Serial Bus (USB) flash drive, memory card, optical disc such as compact disc (CD) or digital versatile disc (DVD), floppy disk, magnetic tape, or other memory components.

The memory includes both volatile and nonvolatile memory and data storage components. Volatile components are those that do not retain data values upon loss of power. Nonvolatile components are those that retain data upon a loss of power. Thus, the memory can include random-access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, or other memory components, or a combination of any two or more of these memory components. In addition, the RAM can include static random-access memory (SRAM), dynamic random-access memory (DRAM), or magnetic random-access memory (MRAM) and other such devices. The ROM can include a programmable read-only memory (PROM), an erasable programmable read-only memory (EPROM), an electrically erasable programmable read-only memory (EEPROM), or other like memory device.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, etc. Such technologies are generally well known by those skilled in the art and, consequently, are not described in detail herein.

The flowchart shows the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowchart shows a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowchart can be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (e.g., storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random-access memory (SRAM) and dynamic random-access memory (DRAM), or magnetic random-access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment 303.

Disjunctive language such as the phrase "at least one of X, Y, or Z," unless specifically stated otherwise, is otherwise understood with the context as used in general to present that an item, term, etc., can be either X, Y, or Z, or any combination thereof (e.g., X; Y; Z; X or Y; X or Z; Y or Z; X, Y, or Z; etc.). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure.

## Claims

1. A system comprising a computing device comprising a processor and a memory, and machine-readable instructions stored in the memory that, when executed by the processor, cause the computing device to at least:
obtain segment analysis data for a given segment and a given tire, the segment analysis data comprising at least one of: tire data, vehicle data, or manual inspection data;
determine a remaining tread depth of the tire based at least in part on the segment analysis data, the remaining tread depth corresponding to a tread depth of the tire at a segment start;
determine a segment distance based at least in part on the segment analysis data, the segment distance corresponding to a distance the tire has traveled up to a segment end; apply at least the remaining tread depth and the segment distance as inputs to a tread wear condition model; and
predict a tread wear condition based at least in part on an output of the tread wear condition model.

2. The system of claim 1, wherein the segment corresponds to a period of time without manipulation of the tire, and the machine-readable instructions further cause the computing device to at least determine the segment start and the segment end based at least in part on a predefined traveled distance of the vehicle, a predefined period of time, or a manual inspection date.

3. The system of claim 1 or 2, wherein the tread wear condition comprises an available time to reach a replacement tread depth, a remaining available distance for the tire to reach a replacement tread depth, or an estimated current tread depth.

4. The system of at least one of the previous claims, wherein (i) the segment analysis data comprises the tire data, and the machine-readable instructions further cause the computing device to at least obtain the tire data from a sensor unit in data communication with the at least one computing device, the tire data comprising tire parameters measured by the sensor unit mounted on the tire; and/or wherein (ii) the segment analysis data comprises the vehicle data, and the machine-readable instructions further cause the computing device to at least obtain the vehicle data from a vehicle CAN bus in communication with one or more vehicle systems of a vehicle supported by the tire, the vehicle data comprising at least one of a vehicle speed, a vehicle load, an odometer value, or a brake cylinder pressure value.

5. The system of at least one of the previous claims, wherein (i) the segment analysis data comprises the manual inspection data, the machine-readable instructions further cause the computing device to at least obtain the manual inspection data in response to one or more user interactions with a user interface rendered on a client device, the manual inspection data comprising a measure tread depth and at least one of an inspection date, an inspector name, a tire position, or a tire pressure; and/or wherein (ii) the inputs to the tread wear condition model further comprise at least one of a tire position, an average temperature during the segment, an average pressure during the segment, or an average brake cylinder pressure.

6. The system of claim 5, wherein the inputs further comprise the average temperature and the average pressure, and the machine-readable instructions further cause the computing device to at least:
calculate the average temperature during the segment based at least in part on temperature data included in the tire data; and
calculate the average pressure during the segment based at least in part on temperature data included in the tire data.

7. The system of at least one of the previous claims, wherein the tread wear condition model comprises a linear machine learning model, and the machine-readable instructions further cause the computing device to at least execute the tread wear condition model.

8. The system of at least one of the previous claims, wherein the at least one computing device comprises a vehicle computing device installed in a vehicle supported by the tire or a cloud computing device that is remote from the vehicle.

9. A method comprising:
obtaining, via at least one computing device, segment analysis data for a given segment and a given tire, the segment analysis data comprising at least one of: tire data, vehicle data, or manual inspection data;
determining, via the at least one computing device, a remaining tread depth of the tire based at least in part on the segment analysis data, the remaining tread depth corresponding to a tread depth of the tire at a segment start;
determining, via the at least one computing device, a segment distance based at least in part on the segment analysis data, the segment distance corresponding to a distance the tire has traveled up to a segment end;
applying, via the at least one computing device, at least the remaining tread depth and the segment distance as inputs to a tread wear condition model; and
predicting, via the at least one computing device, a tread wear condition based at least in part on an output of the tread wear condition model.

10. The method of claim 9, wherein the segment corresponds to a period of time without manipulation of the tire, and wherein the method further comprises determining the segment start and the segment end based at least in part on a predefined traveled distance of the vehicle, a predefined period of time, or a manual inspection date.

11. The method of claim 9 or 10, wherein (i) the tread wear condition comprises an available time to reach a replacement tread depth, a remaining available distance for the tire to reach a replacement tread depth, or an estimated current tread depth; and/or wherein (ii) the segment analysis data comprises the tire data and the method further comprises obtaining the tire data from a sensor unit in data communication with the at least one computing device, the tire data comprising tire parameters measured by the sensor unit mounted on the tire.

12. The method of at least one of the claims 9 to 11, wherein the segment analysis data comprises the vehicle data and the method further comprises obtaining the vehicle data from a vehicle CAN bus in communication with one or more vehicle systems of a vehicle supported by the tire, the vehicle data comprising at least one of a vehicle speed, a vehicle load, an odometer value, or a brake cylinder pressure value.

13. The method of at least one of the claims 9 to 12, wherein the segment analysis data comprises the manual inspection data and the method further comprises obtaining the manual inspection data in response to one or more user interactions with a user interface rendered on a client device, the manual inspection data comprising a measured tread depth and at least one of an inspection date, an inspector name, a tire position, or a tire pressure.

14. The method of at least one of the claims 9 to 13, wherein the inputs to the tread wear condition model further comprise at least one of a tire position, an average temperature during the segment, an average pressure during the segment, or an average brake cylinder pressure; and, optionally, wherein the inputs further comprise the average temperature and the average pressure and the method optionally further comprises calculating the average temperature during the segment based at least in part on temperature data included in the tire data, and calculating the average pressure during the segment based at least in part on temperature data included in the tire data.

15. The method of at least one of the claims 9 to 14, wherein the tread wear condition model comprises a linear machine learning model and the method further comprises executing the tread wear condition model.
